# EUROPÄISCHE PATENTSCHRIFT

(11) **EP 3 891 025 B1**
(45) Veröffentlichungstag und Bekanntmachung des Hinweises auf die Patenterteilung: **12.07.2023**
(21) Anmeldenummer: 19804631.0
(22) Anmeldetag: 24.10.2019
(51) Int. Cl.: B60R 21/26, B60R 21/272

(54) **GASGENERATOR, GASSACKMODUL, FAHRZEUGSICHERHEITSSYSTEM UND VERFAHREN ZUR HERSTELLUNG EINES GASGENERATORS**
GAS GENERATOR, AIRBAG MODULE, VEHICLE SAFETY SYSTEM AND METHOD FOR PRODUCING A GAS GENERATOR
GÉNÉRATEUR DE GAZ, MODULE DE COUSSIN GONFLABLE, SYSTÈME DE SÉCURITÉ DE VÉHICULE ET PROCÉDÉ POUR FABRIQUER UN GÉNÉRATEUR DE GAZ

(30) Priorität: 07.12.2018 DE 102018131323
(43) Veröffentlichungstag der Anmeldung: 13.10.2021
(73) Patentinhaber: ZF Airbag Germany GmbH, 84544 Aschau a. Inn (DE)
(72) Erfinder: ENGLBRECHT, Karl, 84513 Erharting (DE); KOLBIN, Vadim, 85540 Haar (DE)
(74) Vertreter: ZF Patentabteilung - DIPS
(86) Internationale Anmeldenummer: PCT/EP2019/078987
(87) Internationale Veröffentlichungsnummer: WO 2020/114676

(56) Entgegenhaltungen:
- JP-A- H02 158 443
- US-A1- 2006 087 106

## Beschreibung

Die Erfindung betrifft einen Gasgenerator für ein Fahrzeugsicherheitssystem, nach dem Oberbegriff des Patentanspruchs 1. Ferner betrifft die Erfindung ein Gassackmodul mit einem Gasgenerator, ein Fahrzeugsicherheitssystem mit einem Gasgenerator und ein Verfahren zur Herstellung eines Gasgenerators.

Aus dem Stand der Technik sind Gasgeneratoren, insbesondere Gasgeneratoren für ein Fahrzeugsicherheitssystem, bekannt, welche dazu bestimmt sind, bei Vorliegen eines Aktivierungssignals bestimmungsgemäß eine bestimmte Menge an Gas bereitzustellen bzw. zu generieren, um beispielsweise einen aufblasbaren Gassack mit Gas zu füllen, um beispielsweise eine Person vor einem Aufprall an Bauteilen des Fahrzeugs zu schützen bzw. einen solchen Aufprall abzumildern. Hierbei sind Gasgeneratoren bekannt, die eine Längsachse haben, insbesondere rohrförmig ausgestaltet sind, ein äußeres Gehäuse aufweisen, das als Druckgasbehälter ausgebildet ist, welcher im Ruhezustand des Gasgenerators mit einem Druckgas befüllt ist. Das Gehäuse eines derartig bekannten Gasgenerators ist dabei an einem Gehäuseende mit einem Verschlusselement mittels einer Schweißverbindung verschlossen ist, wobei sich das Verschlusselement entlang der Längsachse von der Schweißverbindung in das Gehäuse hinein erstreckt. Unter dem Begriff "im Ruhezustand" ist hier gemeint, dass der Gasgenerator bereits vor seiner bestimmungsgemäßen Aktivierung bzw. Auslösung durch ein Aktivierungssignal, wie es beispielsweise bei einem Unfall eines Fahrzeugs, in welches der Gasgenerator eingebaut ist der Fall ist, mit einem unter Druck stehenden Gas, nämlich dem Druckgas, befüllt ist. Damit das derartig vorgespannte Druckgas nicht vor der bestimmungsgemäßen Aktivierung des Gasgenerators aus dem Gasgenerator bzw. dem Gehäuse des Gasgenerators entweichen kann, ist dieses Gehäuse, das als Druckgasgehälter ausgebildet ist, durch das Verschlusselement, welches mittels der Schweißverbindung an dem Gehäuseende des Gehäuses angebracht bzw. dort mit diesem verschweißt ist, druckdicht verschlossen. Derartige Gasgeneratoren mit einem vorgespannten Druckgas sind auch unter dem Begriff Hybridgasgeneratoren bekannt. Das Dokument US2006/087106 A1 offenbart einenGasgenerator für ein Fahrzeugsicherheitssystem, mit einer Längsachse, einem äußeren Gehäuse das als Druckgasbehälter ausgebildet ist, welcher im Ruhezustand des Gasgenerators mit Druckgas befüllt ist, wobei das Gehäuse an einem Gehäuseende mit einem Verschlusselement mittels einer Schweißverbindung verschlossen ist und sich das Verschlusselement entlang der Längsachse von der Schweißverbindung in das Gehäuse hinein erstreckt wobei das Gehäuse zumindest eine Sicke hat wobei ein Sickengrund der Sicke in einem Bereich einer axialen Längserstreckung (Le) des Verschlusselements angebracht ist.

Weiter ist bei derartigen Gasgeneratoren bekannt, dass sie an ihrem äußeren Gehäuse auch eine Vertiefung bzw. eine Sicke aufweisen können, welche für ein Zusammenwirken bzw. für ein Zusammenspiel mit einem anderen Bauteil des Gasgenerators ausgebildet ist. Gemeint ist damit, dass eine derartige bekannte Sicke im äußeren Gehäuse des Gasgenerators in unmittelbaren Kontakt mit dem anderen Bauteil des Gasgenerators steht. Eine derartige Sick kann beispielsweise als ein Mittel zur Positionierung oder Befestigung des anderen Bauteils dienen.

Ein derartiger bekannter Gasgenerator ist beispielsweise in der Schrift DE 10 2017 100 857 A1 offenbart. Der dort beschriebene Gasgenerator hat eine Längsachse und ein äußeres Gehäuse das als Druckgasbehälter, welcher im Ruhezustand des Gasgenerators mit Druckgas befüllt ist, ausgebildet ist. Das Gehäuse ist dabei an einem Gehäuseende mit einem Verschlusselement mittels einer Schweißverbindung verschlossen, wobei sich das Verschlusselement entlang der Längsachse von der Schweißverbindung in das Gehäuse hinein erstreckt. Zudem weist der dort offenbarte Gasgenerator an seinem äußeren Gehäuse eine umlaufende Sicke auf, welche als Auflager für ein im Innenbereich des Gehäuses positioniertes weiteres Bauteil, das als Begrenzungsscheibe ausgebildet ist, dient. Die Begrenzungsscheibe kontaktiert dabei die Sicke entlang ihres Umfangs und liegt an dieser auf. Anders ausgedrückt, bildet diese bekannte Sicke einen Anschlag bzw. ein Positionierungselement für eine Befestigung eines im Innenbereich des Gasgenerators gelagertes Bauteils des Gasgenerators. Eine derartige bekannte Sicke ist also für ein Zusammenwirken bzw. für ein Zusammenspiel mit einem anderen Bauteil des Gasgenerators ausgebildet und steht in unmittelbaren Kontakt mit dem anderen Bauteil des Gasgenerators.

An einem derartigen Gasgenerator, wie er beispielsweise in der DE 10 2017 100 857 A1 offenbart ist, ist von Nachteil, dass die Schweißverbindung zwischen dem Verschlusselement und dem Gehäuseende des äußeren Gehäuses des Gasgenerators, das als Druckgasbehälter ausgebildet ist, relativ aufwändig, insbesondere massiv und mit einer relativ großen Querschnittsfläche, ausgelegt werden muss, um bekannte Lastwechseltests zu erfüllen. Unter dem Begriff "Lastwechseltest" ist hier gemeint, dass im Rahmen einer Spezifikation für den bekannten Gasgenerator mitunter ein Test durchzuführen ist, bei dem der Gasgenerator einer Vielzahl von Zyklen wechselnder Außentemperaturen ausgesetzt wird, was zumindest teilweise einen Bereich seines Lebenszyklus bis zu seiner Aktivierung simulieren soll. Konkret ist damit gemeint, dass durch wechselnde Temperaturzyklen, denen der Gasgenerator ausgesetzt wird, der Innendruck des Gasgenerators, insbesondere seines als Druckgasbehälter ausgebildeten äußeren Gehäuses, dementsprechend zyklisch erhöht bzw. erniedrigt wird. Das Gehäuse des Druckgasbehälters wird dabei entsprechend nach außen (bei Druckerhöhung durch Temperaturerhöhung) bzw. nach innen (bei Druckerniedrigung durch Temperaturerniedrigung) elastisch verformt, insbesondere auch in unmittelbarer Umgebung der Schweißnaht. Dadurch wird die Schweißnaht mit mechanischer Zug- und Druckspannung im zyklischen Wechsel dementsprechend belastet bzw. beansprucht. Einen derartigen Lastwechseltest soll der Gasgenerator mitunter dahingehend erfolgreich bestehen, indem die Schweißnaht, die den Druckgasbehälter nach außen hin druckdicht verschließt, ihre bestimmungsgemäße Funktion, insbesondere qualitative Dichtigkeit, bei bzw. nach dem Lastwechseltest beibehält.

Vor diesem Hintergrund ist es Aufgabe der vorliegenden Erfindung, einen Gasgenerator anzugeben, der den vorgenannten Nachteil überwindet bzw. reduziert und/oder ein optimiertes Design für den Gasgenerator anzugeben, bei dem die Festigkeit der Schweißnaht erhöht wird.

Ferner ist es Aufgabe der Erfindung ein weiterentwickeltes Gassackmodul und Fahrzeugsicherheitssystem anzugeben. Zudem ist es Aufgabe der Erfindung ein weiterentwickeltes Verfahren zu einer Herstellung eines Gasgenerators anzugeben, welches zumindest einen der vorgenannten Nachteile überwindet.

Erfindungsgemäß wird diese Aufgabe im Hinblick auf den Gasgenerator durch den Gegenstand des Patentanspruches 1, im Hinblick auf das Gassackmodul durch den Gegenstand des Patentanspruches 11, im Hinblick auf das Fahrzeugsicherheitssystem durch den Gegenstand des Patentanspruches 12 und im Hinblick auf das Verfahren zu einer Herstellung eines Gasgenerators durch den Gegenstand des Patentanspruches 13 gelöst.

Zur Lösung der eingangs genannten Aufgaben sieht die Erfindung einen Gasgenerator vor, insbesondere einen Gasgenerator für ein Fahrzeugsicherheitssystem, mit einer Längsachse, einem äußeren rohrförmigen Gehäuse, das als Druckgasbehälter ausgebildet ist, welcher im Ruhezustand des Gasgenerators mit Druckgas befüllt ist, wobei das Gehäuse an einem Gehäuseende mit einem Verschlusselement mittels einer Schweißverbindung verschlossen ist, und sich das Verschlusselement entlang der Längsachse von der Schweißverbindung in das Gehäuse hinein erstreckt, wobei das Gehäuse zumindest eine Sicke für eine mechanische Entlastung der Schweißverbindung als eine zumindest bereichsweise radial um das Gehäuse umlaufende Vertiefung aufweist, wobei die Sicke nach Art und Weise eines Kniegelenks nach radial außen und radial innen entsprechend einer Innendruckänderung in dem Druckgasbehälter bewegbar ist, und wobei ein Sickengrund der Sicke in einem Bereich einer axialen Längserstreckung des Verschlusselements angebracht ist. Als Sickengrund ist hier eine Stelle mit maximaler nach radial innen gerichteten Vertiefung im Bereich der Sicke in dem äußeren Gehäuse zu verstehen.

Die vorherrschende Meinung der Fachwelt, zeitlich vor der vorliegenden Erfindung, war bisher, dass jegliche Sicke in einem äußeren Gehäuse eines Druckgasbehälters eines eingangs genannten bekannten Gasgenerators wenn möglich zu vermeiden ist, da durch eine derartige "unnötige" Sicke die Struktur des äußeren Gehäuses unnötig geschwächt wird. Dementsprechend wurde bisher in einem äußeren Gehäuse eines bekannten Gasgenerators, das als ein Druckgasbehälter ausgebildet ist, nur dann eine Sicke eingebracht, wenn diese für ein Zusammenwirken bzw. für ein Zusammenspiel mit einem anderen Bauteil des Gasgenerators unbedingt benötigt wurde, und beispielsweise als ein Anschlagselement, Positionierungsmittel und/oder Befestigungsmittel für ein im inneren des Gehäuses bzw. Druckgasbehälters angeordnetes weiteres Bauteils dienen musste. Dies ist beispielsweise mit einer Begrenzungsscheibe, wie sie aus der oben beschriebenen DE 10 2017 100 857 A1 bekannt ist, eindrucksvoll dargestellt.

Überraschender Weise hat sich jedoch mit der vorliegenden Erfindung herausgestellt, dass es vorteilhaft sein kann, eine Sicke in dem Druckgasbehälter vorzusehen, einzig zu dem Zweck eine Schweißnaht mechanisch zu entlasten. Insbesondere hat sich hierbei in Bezug auf den eingangs genannten Lastwechseltest herausgestellt, dass eine Schweißnaht mit der ein Verschlusselement ein Gehäuseende des Druckgasbehälters bzw. äußeren Gehäuses des Gasgenerators verschließt, mit einer relativ nahe der Schweißnaht angebrachten Sicke im Gehäuse bezüglich mechanischer Spannungen durch den Lastwechseltest vorteilhaft entlastet werden kann. Durch die Sicke, die einzig der mechanischen Entlastung der Schweißverbindung dient, können Zugspannungen und/oder Druckspannungen, die durch den zyklischen Lastwechseltest auf die Schweißverbindung naturgemäß ausgeübt werden, vorteilhaft ausgeglichen werden bzw. es können durch die Sicke entsprechend mehr Zyklen eines Lastwechseltests positiv bestanden werden. Dementsprechend kann die Schweißnaht durch die Sicke einen längeren bzw. härteren Lastwechseltest beanstandungsfrei bestehen. Die zumindest eine Sicke des erfindungsgemäßen Gasgenerators weist also einen Sickengrund auf, der von außen her betrachtet, als die tiefste Stelle bzw. als die Stelle mit einer größten Sickentiefe der zumindest einen Sicke aufzufassen ist, wobei der Sickengrund in einem Bereich einer axialen Längserstreckung des Verschlusselements angebracht ist. Durch diese Anordnung bzw. axiale Positionierung der Sicke bzw. ihres Sickengrunds ist die zumindest eine Sicke derart positioniert, dass sie überhaupt für eine entsprechende mechanische Entlastung der Schweißverbindung dienen kann.

Bei dem äußeren rohrförmigen Gehäuse des Gasgenerators handelt es sich um einen Druckgasbehälter, welcher im Ruhezustand des Gasgenerators, wenn dieser also noch nicht bestimmungsgemäß aktiviert worden ist, ein vorgespanntes, unter Druck stehendes Gas bzw. Gasgemisch aufweist. Demnach ist der erfindungsgemäße Gasgenerator als ein Hybridgasgenerator ausgebildet, welcher beispielsweise ein Gas bzw. Gasgemisch aus der Gruppe Argon, Helium, Sauerstoff oder Stickstoff, beispielsweise bei einem Druck von 550 bar bei Raumtemperatur aufweisen kann. Bei dem erfindungsgemäßen Gasgenerator handelt es sich um einen sogenannten Rohrgasgenerator, dessen äußeres Gehäuse im Wesentlichen einem langgestreckten Rohr entspricht, dessen Längserstreckung ein Mehrfaches seiner Erstreckung in Radialrichtung haben kann.

Vorzugsweise hat die zumindest eine Sicke des erfindungsgemäßen Gasgenerators keine weiteren gasgeneratorspezifischen Funktionen. Konkret heißt dies, dass die zumindest eine Sicke einzig und alleine für eine mechanische Entlastung der Schweißnaht, wie zuvor beschrieben, dient und keinerlei weitere Aufgaben bzw. Funktionen für den Gasgenerator innehat. Insbesondere erfüllt sie demnach nicht die Funktion eines Mittels für eine Zusammenwirkung bzw. ein Zusammenspiel mit einem weiteren Bauteil des Gasgenerators und dient deshalb auch nicht als eine Positionierung, als ein Anschlag oder ein Mittel zur Festlegung bzw. Befestigung von anderen Bauteilen.

Das äußere Gehäuse des Gasgenerators ist demnach rohrförmig ausgebildet, wobei die zumindest eine Sicke als eine von außen nach radial innen verlaufende Vertiefung ausgebildet sein kann.

In einer Ausführungsform des erfindungsgemäßen Gasgenerators kann die Schweißverbindung nach Art eines Stumpfstoßes, insbesondere teilüberlappenden Stumpfstoßes, ausgebildet sein. Konkret kann dabei das Gehäuseende des Gehäuses mit seiner dortigen stirnseitigen Querschnittsfläche entweder gesamtflächig oder teilüberlappend an der entsprechenden Gegenfläche des Verschlusselements an bzw. mit der es durch die Schweißnaht verschlossen ist, anstehen bzw. anliegen. Somit ist hierbei die Schweißnaht durch ein stumpfes Aneinanderstoßen der zu verschweißenden Gegenflächen ausgeprägt, im Gegensatz zu einer Schweißverbindung nach Art eines "T-Stoßes". Im Zuge der Erfindung war besonders wirksam die vorteilhafte Wirkung der zumindest einen Sicke hinsichtlich der mechanischen Entlastung der Schweißverbindung bei der Schweißverbindung nach Art eines Stumpfstoßes, insbesondere teilüberlappenden Stumpfstoßes, zu beobachten, da sich hier die Druck- und/oder Zugbelastungen bei dem beschriebenen Lastwechseltest anders auswirken, als bei einer anderen Art der Schweißverbindung, beispielsweise einer Schweißverbindung nach Art eines "T-Stoßes".

Vorzugsweise ist das Verschlusselement als ein Bereich des Außengehäuses des Gasgenerators ausgebildet. Hierbei kann das Verschlusselement einen stirnseitigen Verschluss bzw. ein stirnseitiges Ende des Gasgenerators ausbilden und somit auch einen axialen bzw. stirnseitigen Abschluss des Druckgasbehälters darstellen. Zudem kann das Verschlusselement auch als eine Anzündereinheit ausgebildet sein und insbesondere eine pyrotechnische Boosterladung, bevorzugt in Form einer losen Schüttung von pyrotechnischen Formkörpern, und bevorzugt einen elektrischen pyrotechnischen Anzünder als vormontierte Baugruppe, umfassen. Beide Baugruppen, der elektrisch pyrotechnische Anzünder und die Boosterladung, können dabei auch in Form einer einzigen, entsprechend größeren Baueinheit, einem hochaufgeladenen Anzünder mit entsprechend größeren Menge an Pyrotechnik, vorliegen. Auch kann das Verschlusselement das äußere Gehäuse entlang der Längsachse nach außen hin überragen. Dabei kann das Verschlusselement ein axiales Endstück des gesamten Gasgenerators darstellen.

Insbesondere kann das Verschlusselement als massives Bauteil ausgebildet sein, welches im Bereich der Schweißverbindung, betrachtet in einer Schnittebene senkrecht zur Längsachse des Gasgenerators, eine größere Materialdicke als das Gehäuseende, insbesondere eine 1,2 bis 3-fache, weiters insbesondere eine 1,5 bis 2,5-fache, vorzugsweise eine 2-fache, Materialdicke des Gehäuseendes, aufweisen. Indem das Verschlusselement im Bereich der Schweißverbindung dicker bzw. massiver als das Gehäuse bzw. das entsprechend mit dem Verschlusselement dort verschweißte Gehäuseende ausgebildet ist, wird sich das Verschlusselement dort bei einem Lastwechseltest, also einer Schwankung des Innendrucks des Druckgasbehälters sich auch anders verhalten bzw. entsprechend weniger stark elastisch verformen wie das dünnere Gehäuseende. Dies bedeutet, dass die zumindest eine Sicke hier eine mechanische Entlastung der Schweißverbindung besonders gut ermöglicht, im Gegensatz dazu wenn die beiden Bauteile, Verschlusselement und Gehäuseende, eine in etwa ähnliche Materialdicke aufweisen würden, oder das Verschlusselement hier sogar eine geringere Materialdicke hätte.

Eine Ausführungsform der Erfindung sieht vor, dass mehrere Sicken radial umlaufend, insbesondere an einer im Wesentlichen gleichen axialen Position entlang der Längsachse des Gasgenerators, an dem Gehäuse angebracht sind. Dies kann beispielsweise vorteilhaft mit einem einzigen Herstellungsschritt durch ein von außen nach innen zusammenführbares Krimpwerkzeug, das eine entsprechende Anzahl an Krimpbacken für die herzustellende Sickenanzahl aufweist, realisiert werden, ohne dass das Werkzeug oder das Gehäuse des Gasgenerators in eine Rotationsbewegung versetzt werden müssen. Alternativ dazu kann die zumindest eine Sicke als eine durchgehende radial umlaufende Vertiefung ausgebildet ist, welche einen Außendurchmesser des Gehäuses im Bereich der Sicke auf einen Sickendurchmesser reduziert. Hier bietet es sich an bei der Herstellung einer solchen umlaufenden Sicke ein Rollierwerkzeug zu verwenden, welches in einem oder mehreren radial umlaufenden Rollierschritten die entsprechende Sicke in das Gehäuse einbringt.

Bevorzugt ist der Sickengrund hin zu dem Gehäuseende in einem axialen Abstand von 5mm bis 30mm, insbesondere 10mm bis 20mm, vorzugsweise 15mm, positioniert und vorzugsweise ist der Sickengrund im Wesentlichen mittig der axialen Längserstreckung des Verschlusselements angebracht. Durch eine derartige relativ nahe Position des Sickengrunds bzw. der Sicke selbst zu dem Gehäuseende hin und damit zu der dortigen Schweißnaht hin, kann eine optimale mechanische Entlastung der Schweißverbindung bewirkt werden. Vorzugsweise ist die maximale radiale Vertiefung an der Position des Sickengrunds als eine Sickentiefe, insbesondere mit einer Tiefe im Bereich von 0,5mm bis 2mm, vorzugsweise 1mm, ausgebildet. Eine bevorzugte Ausführungsform der Erfindung hat einen Sickengrund, der durch eine erste Sickenflanke und eine zweite Sickenflanke gebildet ist, wobei die beiden Sickenflanken schräg radial nach innen, aufeinander zulaufende, äußere Abschnitte des Gehäuses darstellen, die sich in einem Radius, insbesondere mit einem Wert im Bereich von 1mm bis 4mm, vorzugsweise 2mm, an der Position des Sickengrunds treffen. Weiter bevorzugt hat die zumindest eine Sicke einen Sickenöffnungswinkel mit einem Wert von 160° bis 170°, insbesondere 165°. Bei diesen zuvor genannten Werten konnte eine optimale mechanische Entlastung der Schweißverbindung bewirkt werden bzw. konnte eine optimale hohe Festigkeit der Schweißnaht bei bzw. nach einem Lastwechseltest erreicht werden.

Insbesondere ist die zumindest eine Sicke als eine plastische Verformung, insbesondere in Form einer Krimpung, Bördelung, Prägung oder Rollierung am äußeren Gehäuse des Gasgenerators ausgebildet, wobei die zumindest eine Sicke bei einer Druckerhöhung im Inneren des Gasgenerators nach außen, insbesondere in Richtung einer Bewegungsrichtung im Wesentlichen senkrecht zu der Längsachse des Gasgenerators bewegbar, ist. Damit kann der Bereich des äußern Gehäuses des Gasgenerators an dem die Sicke angebracht ist, quasi nach Art und Weise eines "Kniegelenks" nach radial außen und radial innen abgelenkt bzw. elastisch mit einer entsprechenden Innendruckänderung in dem Druckgasbehälter, wie es bei dem oben beschriebenen Lastwechseltest der Fall ist, mitbewegt werden, und somit einen Teil der mechanischen Spannungen, insbesondere Zug- und/oder Druckspannungen aufnehmen und dadurch die Schweißverbindung entsprechend entlasten.

Die Schweißverbindung kann als eine Laserschweißung, Widerstandsschweißung oder Reibschweißung, vorzugsweise als eine MIG, MAG oder Ultraschallschweißung, insbesondere radial umlaufend, ausgebildet sein.

Ein weiterer nebengeordneter Aspekt der Erfindung betrifft ein Gassackmodul mit einem von dem erfindungsgemäßen Gasgenerator aufblasbaren Gassack und einer Befestigungseinrichtung zur Anbringung des Gassackmoduls an einem Fahrzeug. Es ergeben sich ähnliche Vorteile, wie diese bereits im Zusammenhang mit dem erfindungsgemäßen Gasgenerator angegeben sind.

Ein zusätzlicher nebengeordneter Aspekt der Erfindung betrifft ein Fahrzeugsicherheitssystem zum Schutz einer Person, beispielsweise eines Fahrzeuginsassen oder Passanten, mit einem von dem erfindungsgemäßen Gasgenerator aufblasbaren Gassack, als Teil eines Gassackmoduls, und einer elektronischen Steuereinheit, mittels der der erfindungsgemäße Gasgenerator bei Vorliegen einer Auslösesituation aktivierbar ist. Es ergeben sich ähnliche Vorteile, wie diese bereits im Zusammenhang mit dem erfindungsgemäßen Gasgenerator angegeben sind.

Ein weiterer nebengeordneter Aspekt der Erfindung betrifft ein Verfahren zur Herstellung eines erfindungsgemäßen Gasgenerators, mit folgenden Schritten:
a) Bereitstellen eines äußeren rohrförmigen, Gehäuses für den Gasgenerator, das als Druckgasbehälter ausgebildet ist und ein axialseitiges Gehäuseende aufweist, wobei das Gehäuseende eine Öffnung des Gehäuses darstellt;
b) Herstellen zumindest einer Sicke im Gehäuse von außen her als eine zumindest bereichsweise radial um das Gehäuse umlaufende Vertiefung, wobei die zumindest eine Sicke einzig für eine mechanische Entlastung einer Schweißverbindung dient und nach Art und Weise eines Kniegelenks nach radial außen und radial innen entsprechend einer Innendruckänderung in dem Druckgasbehälter bewegt werden kann und für keine weiteren gasgeneratorspezifischen Funktionen, insbesondere nicht für eine Positionierung, Befestigung oder Orientierung, verwendet wird.

Im Schritt b) kann die zumindest eine Sicke insbesondere in Form einer Krimpung, Bördelung, Prägung oder Rollierung hergestellt werden.

Insbesondere kann hierbei die zumindest eine Sicke in Form von mehreren Sicken radial umlaufend, insbesondere an einer im Wesentlichen gleichen axialen Position entlang einer Längsachse des Gasgenerators, oder in Form einer durchgehenden radial umlaufenden Vertiefung, welche den Außendurchmesser des Gehäuses im Bereich der zumindest einen Sicke auf einen Sickendurchmesser reduziert, hergestellt werden.

Es ist möglich, dass dabei das äußere Gehäuse für den Gasgenerator als ein Bestandteil einer bereits vormontierten Gasgeneratorbaugruppe bereitgestellt wird, bei welcher das Gehäuse als Druckgasbehälter ausgebildet ist und mit einem Druckgas, vorzugsweise mit einem Druck im Bereich von 400bar bis 600bar, befüllt ist und nach außen hin mittels der Schweißverbindung, vorzugsweise radial umlaufend, druckdicht verschlossen ist.

Vorzugsweise kann das äußere Gehäuse für den Gasgenerator auch als ein für sich separates Bauteil bereitgestellt werden, wobei nach Herstellung der zumindest einen Sicke folgende weitere Schritte vorgenommen werden:
c) Einbauen von weiteren Bauteilen für den Gasgenerator innerhalb des Gehäuses;
d) Befüllen des Gehäuses mit einem Druckgas, vorzugsweise mit einem Druck im Bereich von 400bar bis 600bar;
e) Druckdichtes Verschließen des Gehäuses an dem Gehäuseende und dem dem Gehäuseende axial gegenüberliegenden anderen Ende des Gehäuses; und
f) Optional weiteres Verbauen von weiteren Bauteilen für den Gasgenerator, insbesondere endseitiges Anbringen eines Diffusors, an das Gehäuse.
Eine derartige Herstellungsweise hat den Vorteil, dass die Schweißnaht durch die zumindest eine Sicke bereits sozusagen mechanisch vorgespannt ist, bevor das Druckgas in das Gehäuse befüllt wird. Dabei können in der Schweißverbindung die mechanischen Spannungen derart angepasst sein bzw. derart hoch sein, dass nach der Befüllung mit Druckgas die maximalen Spannungen unter einem Wert eines vergleichbaren verschweißten Druckgasbehälters, welcher nicht mit einer Sicke für eine mechanische Entlastung der Schweißverbindung versehen ist, liegen. Weiters kann hierbei bei dem befüllten Druckgasbehälter und bei der tiefsten spezifizierten Temperatur in dem eingangs beschriebenen Lastwechseltest, insbesondere bei einer Temperatur von -40°C, keine Umkehr der mechanischen Spannung stattfinden. Dies bedeutet, dass hierbei im Lastwechseltest mechanische Spannungsspitzen vorteilhaft reduziert bzw. "abgeschnitten" werden und damit eine Festigkeit der Schweißverbindung bezüglich des Lastwechseltests erhöht werden kann.

Die Erfindung wird im Folgenden anhand eines Ausführungsbeispiels unter Bezugnahme auf die beigefügten, schematischen Figuren näher erläutert: Darin zeigen:
Fig. 1 eine Längsschnittansicht durch den erfindungsgemäßen Gasgenerator;
Fig. 2 eine vergrößerte Darstellung eines Teilbereichs des erfindungsgemäßen Gasgenerators mit reduzierter Bauteildarstellung;

Im Folgenden werden für gleiche und gleichwirkende Bauteile dieselben Bezugsziffern verwendet.

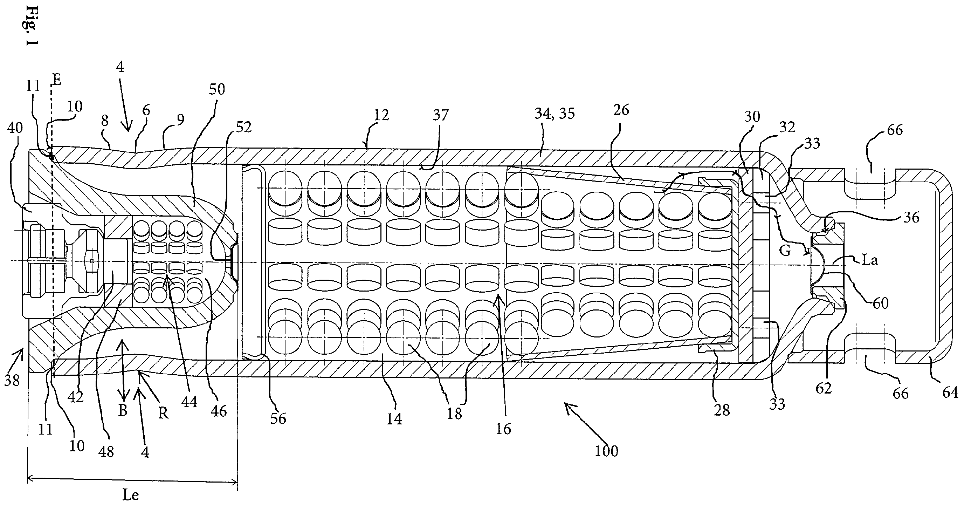

Fig. 1 zeigt einen Längsschnitt durch einen Gasgenerator 100 mit einer Längsachse La und mit einem äußeren Gehäuse 34, das rohrförmig bzw. im Wesentlichen zylinderförmig aufgebaut ist, wobei an einer Stirnseite des Gehäuses 34 ein Verschlusselement 50 mit einem ersten Berstelement 52 angebracht ist, um das Gehäuse 34 an seinem dortigen Gehäuseende 10 mittels einer Schweißverbindung 11 druckdicht zu verschließen. An dem dem Gehäuseende 10 axial gegenüberliegenden Ende des Gehäuses 34 ist eine Ausströmöffnung 36 ausgebildet, welche mittels eines Verschlussstücks 62 mit einem zweiten Berstelement 60 druckdicht verschlossen ist, wobei vorzugsweise das zweite Berstelement 60 an das Verschlussstück 62 und dieses wiederum an die Ausströmöffnung 36 angeschweißt ist. Dabei sind die Bauteile Verschlusselement 50, erstes Berstelement 52, Verschlussstück 62 und zweites Berstelement 60 alle aus Metall, insbesondere Stahl, ausgebildet. Das Gehäuse 34 des Gasgenerators 100 ist im Ruhezustand des Gasgenerators, also zeitlich vor dessen Aktivierung, mit einem Druckgas bzw. einer Druckgasmischung, vorzugsweise mit einem Druck von 400 bis 600 bar bei Raumtemperatur, befüllt, sodass das Gehäuse 34 auch einen Druckgasbehälter 35 ausbildet. Das Verschlusselement 50 ist als massives Bauteil aus Metall ausgebildet, dessen Materialdicke bzw. Materialstärke vorzugsweise zumindest über einen Teilbereich des Verschlussstücks 50 größer als die Materialdicke des Gehäuses 34 ist. Insbesondere im Bereich der Schweißverbindung 11, betrachtet in einer Schnittebene E, die senkrecht zur Längsachse La des Gasgenerators 100 gelegen ist, hat das Verschlusselement 50 eine ungefähr 2,5-fache Materialdicke des Gehäuseendes 10 in dieser Schnittebene E. Das Verschlusselement 50 ist vorzugsweise als rotationssymmetrisches Bauteil in Form einer Kappe ausgebildet, welche sich entlang bzw. parallel zu der Längsachse La des Gasgenerators 100 mit ihrem Kappenboden in das Gehäuse 34 hinein erstreckt. Dabei weist der Kappenboden des Verschlusselements 50 eine relativ kleine mittige Öffnung auf, welche durch das erste Berstelement 52 druckdicht verschossen ist, indem das erste Berstelement 52 auf bzw. an das Verschlusselement 50 angeschweißt ist.

Das Verschlusselement 50 ist mit dem Gehäuse 34 dabei derart verschweißt, dass es von außen her an das Gehäuseende 10 angesetzt bzw. positioniert ist und nach Art und Weise eines stumpfen Stoßes mit bzw. an das Gehäuseende 10 angeschweißt ist, vorzugsweise durch eine radial umlaufende durchgehende Schweißnaht bzw. durch die Schweißverbindung 11. Dabei überdeckt das Verschlusselement 50 die radiale Querschnittsfläche des Gehäuseendes 10 nicht vollständig, sondern die radiale Querschnittsfläche des Gehäuseendes 10 ragt nach radial außen etwas über die radiale Abschlusskontur des Verschlusselements 50 hinaus, sodass hier eine Schweißverbindung 11 nach Art und Weise eines teilüberlappenden Stumpfstoßes ausgebildet ist. Demnach ist und wirkt das Verschlusselement 50 auch als ein Teil bzw. Bereich des äußeren Gehäuses des Gasgenerators 100.

Das Verschlusselement 50 ist, wie in Figur 1 dargestellt, als eine Anzündereinheit 38 ausgebildet, die als vorgefertigte Baueinheit bei der Montage des Gasgenerators 100 bereitgestellt werden kann, wobei die Anzündereinheit 38 folgende Bauteile umfasst. Einen Anzünder 42, der in einen Anzünderträger 40 verbaut und von diesem gehaltert bzw. fixiert ist, eine pyrotechnische Boosterladung 44, welche in einer Anzündkammer 46 aufgenommen ist, und einen Füllkörper 48, der axial zwischen der Boosterladung 44 und dem Anzündträger 40 bzw. Anzünder 42 positioniert und als kompressibles Element, z.B. aus Silikonschaum, ausgebildet ist, um die Boosterladung 44 in ihrer Lage zu fixieren bzw. um bei der Herstellung des Gasgenerators 100 als entsprechendes Volumenausgleichsmittel für die Boosterladung 44 zu wirken. In einer nicht dargestellten Variante kann die Boosterladung 44 auch entfallen oder direkt in den Anzünder 42 integriert sein, der dann als ein sogenannter hochaufgeladener Anzünder entsprechend länger gebaut ist und sich nahezu über die gesamte innere Länge des Verschlusselements 50 erstrecken kann. Der Anzündträger 40 ist vorzugsweise aus Metall, insbesondere aus Stahl, ausgebildet und an das Verschlusselement 50 angeschweißt.

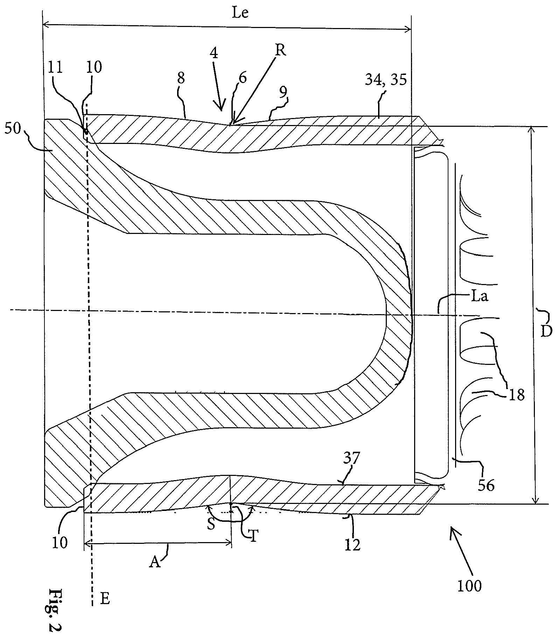

In dem äußeren Gehäuse 34 des Gasgenerators 100 ist eine Sicke 4 mit einem Sickengrund 6, einer ersten Sickenflanke 8 und einer zweiten Sickenflanke 9 ausgebildet, wobei die beiden Sickenflanken 8, 9 schräg nach radial innen aufeinander zulaufende äußere Abschnitte des Gehäuses 34 darstellen, die sich in einem Radius R an der Position des Sickengrunds 6 treffen bzw. dort ineinander übergehen. Die Sicke 4, wie sie in Figur 1 dargestellt ist, ist als eine radial umlaufende durchgehende Sicke bzw. Vertiefung, die von außen nach radial innen verläuft und dabei in dem Sickengrund 6 ihre maximale Tiefe, nämlich die Sickentiefe T (siehe Figur 2), hat. Der Außendurchmesser des Gehäuses 34 wird dort, also an der Position des Sickengrunds 6, auf einen Sickendurchmesser D (siehe Figur 2) reduziert, welcher dort auch den geringsten Außendurchmesser der gesamten Sicke 4 bzw. der entsprechend gesamten axialen Längserstreckung der Sicke 4 ausbildet.

Der Sickengrund 6 ist dabei in einem Bereich einer axialen Längserstreckung Le des Verschlusselements 50, im Wesentlichen mittig davon, in dem Gehäuse 34 angebracht. Die Sicke 4, wie sie damit in Figur 1 dargestellt ist, dient einzig und alleine für eine mechanische Entlastung der Schweißverbindung 11. Es können dabei Zugspannungen und/oder Druckspannungen, die durch einen zyklischen Lastwechseltest auf die Schweißverbindung naturgemäß ausgeübt werden, vorteilhaft ausgeglichen werden bzw. es können durch die Sicke entsprechend mehr Zyklen eines Lastwechseltests positiv bestanden werden, wie dies bereits weiter oben dargelegt ist. Die Sicke 4 bzw. deren Sickengrund 6 ist dabei insbesondere relativ nahe der Schweißverbindung 11 bzw. der Schnittebene E positioniert, um vorteilhaft die mechanische Entlastung der Schweißverbindung 11 zu bewirken.

Die Sicke 4 ist bei einer Druckerhöhung im Inneren des Gasgenerators 100 nach außen oder bei einer Druckerniedrigung im Inneren des Gasgenerators 100 nach innen, insbesondere in Richtung einer Bewegungsrichtung B im Wesentlichen senkrecht zu der Längsachse La des Gasgenerators 100, bewegbar. Dies ist in Figur 1 durch das Doppelpfeil-Symbol mit dem Bezugszeichen "B" dargestellt. Konkret bedeutet dies, dass bei dem Gasgenerator 100, wie er in Figur 1 dargestellt ist, bei einer Temperaturerhöhung der Innendruck des Gasgenerators 100 bzw. der Innendruck des Druckgasbehälters 35 ansteigt und das Gehäuse 34 des Gasgenerators 100 eine naturgemäße entsprechende Ausdehnungs- bzw. Ausgleichsbewegung nach außen hin macht bzw. einer solchen unterliegt. Bei diesem Prozess wird die Sicke 4 entsprechend mit nach außen bewegt bzw. mit nach außen verlagert, was durch das Pfeilsymbol nach außen hin für die Bewegungsrichtung B dargestellt ist. Entsprechend umgekehrt bzw. in die andere Richtung wird die Sicke 4 bewegt, wenn bei einer Temperatursenkung der Innendruck des Gasgenerators 100 bzw. der Innendruck des Druckgasbehälters 35 sinkt, wie es bei dem weiter oben beschriebenen Lastwechseltest der Fall ist. Somit kann die Sicke 4 quasi nach Art und Weise eines "Kniegelenks" nach radial außen und radial innen, in Bewegungsrichtung B, abgelenkt bzw. elastisch mit einer entsprechenden Innendruckänderung in dem Druckgasbehälter 35 mitbewegt werden, und somit einen Teil der mechanischen Spannungen, insbesondere Zug- und/oder Druckspannungen aufnehmen, die durch den Lastwechseltest verursacht werden, und dadurch die Schweißverbindung 11 entsprechend entlasten.

Der Anzündereinheit 38 bzw. dem Verschlusselement 50 axial nachgelagert ist ein Gasdurchlasselement 56 angeordnet, welches als axiales im Wesentlichen planares Element insbesondere durch Kraftschluss entlang seines radialen Umfangs an einer Innenseite 37 des Gehäuses 34 anliegt und eine ihm axial nachgelagerte Brennkammer 14 hin zu dem Verschlusselement 50 begrenzt. Die Brennkammer 14 umfasst eine Vielzahl von einzelnen Treibstoffkörper 18, welche zusammen ein Treibstoffbett 16 ausbilden. Das Gasdurchlasselement 56 ist beispielsweise als scheibenförmiges Lochblech oder Streckmetall ausgeführt und ist in das Gehäuse 34 von der Seite des Gehäuseendes 10 her soweit eingeschoben bzw. eingepresst, dass es an einen Teil der Treibstoffkörper 18 angrenzt und diese und damit auch das gesamte Treibstoffbett 16 in einer vorbestimmten Position hält.

Das Treibstoffbett 16 ist entlang einem Großteil seiner axialen Erstreckung von einem Treibstoffkäfig 26 umgeben. Dabei ist der Treibstoffkäfig 26 als gasdurchlässiger konisch zulaufender Hohlkörper, beispielsweise aus Lochblech oder Streckmetall, ausgebildet und derart ausgerichtet verbaut, dass sein breiteres offenes Ende hin zu dem Gasdurchlasselement 56 weist. Das gegenüberliegende schmälere offene Ende des Treibstoffkäfigs 26 ist von einem Brennkammerboden 28 verschließend abgedeckt, der hier als eine Art Deckel bzw. Verschluss für den Treibstoffkäfig 26 zu betrachten ist und als topfförmiges gasundurchlässiges Metallteil ausgebildet ist. Der Treibstoffkäfig 26 in Zusammenbau mit dem Brennkammerboden 28 weist hier unter anderem auch die Funktion eines Behälters für die Treibstoffkörper 18 auf bzw. kann bei der Herstellung des Gasgenerators 100 als eine Art Fülltrichter bzw. Füllbehältnis für die Treibstoffkörper 18 benutzt werden.
Ein Filter 30 der als ein im Wesentliches scheibenförmig Bauteil ausgebildet ist, schließt sich dem Brennkammerboden 28 axial nachgelagert an und ist vorzugsweise aus Metall ausgebildet, insbesondere als Maschengestrick, Maschengeflecht, Lochblech oder Streckmetall und bildet einen Filter, der äußerst dünn bzw. in seiner axialen Erstreckung platzsparend ausgebildet ist und vorzugsweise als Filter für Partikel und Gase wirkt.
Eine Endscheibe 32 aus Metall mit mehreren Durchgangsöffnungen 33 ist dem Filter 30 axial nachgelagert, im Wesentlichen als flache Scheibe ausgebildet, und liegt an einem Abschnitt des Gehäuses 34 des Gasgenerators 100 an, der von einem zylindrischen in einen konischen Bereich übergeht. Die Endscheibe 32 kann in diesem Abschnitt an dem Gehäuse 34 lediglich aufliegen bzw. anliegen, oder kann zur besseren Fixierung dort auch eingepresst sein. Vorteilhaft ist dabei die Kontur der Stirnseite der Endscheibe 32, welche dem Filter 30 abgewandt ist, der Kontur des Gehäuses 34 im Abschnitt des vorgenannten Übergangs von dem zylindrischen in den konischen Bereich angepasst. Die Endscheibe 32 kann auch als Abschluss bzw. abschließendes Element der Brennkammer 14 in axialer Richtung betrachtet werden.

Wie zuvor beschrieben, weist das Gehäuse 34 des Gasgenerators 100 an dem axialen Ende, das sich gegenüber dem durch das Verschlusselement 50 verschlossene Gehäuseende 10 befindet, eine konisch nach radial innen zulaufende Kontur auf, welche in der Ausströmöffnung 36 endet, die auch als gesamte Ausströmöffnung für Abbrandgas bzw. auszuströmendes Gas aus dem Druckgasbehälter 35 heraus, betrachtet werden kann. Die Ausströmöffnung 36 ist im Ruhezustand, also vor einer Auslösung bzw. Aktivierung des Gasgenerators 100, gasdicht durch das Verschlussstück 62 und das daran fest angebundene zweite Berstelement 60 verschlossen.

Der in Figur 1 dargestellte Gasgenerator 100 bzw. dessen Druckgasbehälter 35 ist im Ruhezustand des Gasgenerators 100 mit einem vorgespannten Druckgas bzw. Gasgemisch beispielsweise aus der Gruppe Argon, Helium, Sauerstoff oder Stickstoff, insbesondere unter einem Druck von 550 bar bei Raumtemperatur, befüllt. Ein derart vorgespeichertes Druckgas wird auch als Kaltgas bezeichnet. Somit zeigt das Design des erfindungsgemäßen Gasgenerators 100 in der Figur 1 einen sogenannten Hybridgasgenerator. Die jeweilig axial gegenüberliegenden gasdichten Verschlüsse für den Druckgasbehälter 35 stellen zum einen das Verschlusselement 50 mit dem ersten Berstelement 52 und zum anderen die Verschlusseinheit umfassend das Verschlussstück 62 mit dem zweiten Berstelement 60 dar. Innerhalb dieser beiden gasdichten Verschlüsse befindet sich also das Druckgas, welches sich insbesondere somit auch zwischen den Treibstoffkörpern 18 befindet bzw. diese umgibt.

Axial nachgeordnet an das axiale Ende des Gehäuses 34 des Gasgenerators 100, welches das Verschlussstück 62 aufweist, ist an eine Außenseite 12 des Gehäuses 34 ein Diffusor 64 mit Auslassöffnungen 66 fest angebunden, wobei der Diffusor 64 an das Gehäuse 34 angeschweißt sein kann, insbesondere durch Laserschweißen, Reibschweißen oder Widerstandsschweißen, oder durch eine kraft- und/oder formschlüssige Anbindung, wie beispielsweise einer Krimp- oder Rollierverbindung, dort festgelegt sein kann. Der Diffusor 64 kann auch als quasi weiterführendes Außengehäuse des Gasgenerators 100 aufgefasst werden und ermöglicht durch seine Auslassöffnungen 66, die auch nur in Form einer einzigen Auslassöffnung 66 ausgebildet sein können, eine Gasabströmung bzw. Gasausleitung aus dem Gasgenerator 100 in dessen Umgebung, insbesondere in einen an den Gasgenerator 100 angeschlossenen aufzublasenden Luftsack (nicht dargestellt).

Die Funktionsweise des erfindungsgemäßen Gasgenerators 100 wird anhand der Fig. 1 wie folgt beschrieben. Bei Vorliegen eines Aktivierungssignals, welches den Gasgenerator 100 aus einer Ruhestellung in einen Aktivierungszustand bzw. Auslösezustand bringt, wird zunächst der Anzünder 42, als vorzugsweise vorgefertigte Baueinheit die eine oder mehrere pyrotechnischer Ladungen (nicht dargestellt) umfassen kann, aktiviert, indem im Inneren des Anzünders 42 ein entsprechend hoher Druck ausbildet wird, der einen Teil der Außenhülle des Anzünders 42 öffnet bzw. aufreißt und heiße Anzündgase bzw. Anzündpartikel freisetzt, welche die Boosterladung 44 anzünden und deren Abbrand bewirken. Innerhalb der Anzündkammer 46 bildet sich sodann ein Innendruck auf, der bei Überschreiten eines entsprechenden Grenzwertes das erste Berstelement 52 öffnet bzw. aufreißt, um heiße Anzündgase bzw. Anzündpartikel in die Brennkammer 14, insbesondere auf bzw. an die axial nächstliegenden Treibstoffkörper 18 hinzuleiten. Hierbei ist es auch denkbar, dass die Boosterladung 44 nicht, wie in Fig. 1 dargestellt, separat zu dem Anzünder 42 ausgebildet ist, sondern bereits in diesen integriert ist, wodurch sich ein gegebenenfalls entsprechend axial länger bauender Anzünder 42 ergeben kann, als er in Fig. 1 abgebildet ist. Sodann werden die Treibstoffkörper 18 entzündet bzw. abgebrannt und eine entsprechende Ausbildung von Gas bzw. Abbrandgas findet statt. Durch das gebildete (heiße) Gas wird der Innendruck in der Brennkammer 14 relativ schnell erhöht, sodass zusätzlich zu dem bereits im Ruhezustand des Gasgenerators in der Brennkammer 14 vorherrschende Druck des dort vorgespeicherten Druckgases ein weiter Druck bzw. ein Überdruck ausgebildet wird, derart, dass bei Überschreitung eines entsprechenden Druck-Schwellenwertes das zweite Berstelement 60 geöffnet wird. Vorzugsweise wird dabei zunächst nur ein gewisser Anteil des in dem Druckgasbehälter 35 vorab gespeicherte Druckgases, also ein Teil des Kaltgases, in den Diffusor 64 abgegeben, um dann weiter in einen aufblasbaren Gassack bzw. Gassackmodul (nicht dargestellt) geleitet zu werden. Hierdurch ergibt sich vorteilhaft eine geringe mechanische Anfangsbelastung für den Gassack bzw. das Gassackmodul, da eine quasi "sanfte" Anfangsentfaltung des Gassacks bzw. "sanfte" Öffnung des Gassackmoduls somit ermöglicht wird. Erst nachdem eine gewisse Menge an Kaltgas aus dem Gehäuse 34 durch die Auslassöffnung 66 ausgeströmt ist, kann heißes Gas, das aus Abbrand der Treibstoffkörper 18 gebildet ist quasi nachströmen und ebenfalls das Gehäuse 34 und den Diffusor 64 verlassen, um den Gassack bestimmungsgemäß vollends zu füllen. Eine derartige Ausströmcharakteristik von Gas aus dem Gasgenerator bzw. eine derartige Druck-Leistungskurve, die sich daraus ergibt, dass zunächst nur eine gewisse geringe Gasmenge aus dem Gasgenerator freigesetzt wird und zeitlich versetzt danach eine größere Gasmenge quasi nachströmt, ist auch unter dem Begriff "S-Slope" bekannt und gilt im Allgemeinen als sehr vorteilhaft, da dadurch ein aufzublasender Gassack bzw. ein diesen umfassendes Gassackmodul anfangs sanft bzw. materialschonend mit Gas gefüllt werden kann, um nach einer gewissen Zeit dann die Restmenge an Aufblasgas einströmen zu lassen.

Wie in Fig. 1 skizziert, strömt das erzeugte Gas entlang einer Gasströmung G, deren Strömungsweg symbolisch mittels einer Linie, mit mehreren Pfeilsymbolen durchsetzt, dargestellt ist. Demnach strömt das Gas bzw. Aufblasgas aus dem inneren Bereich des Treibstoffkäfigs 26 durch dessen konische, gasdurchlässige Seitenwände in Richtung des Filters 30. Hierbei ist es natürlich möglich, dass das Gas über die gesamte Längserstreckung des Treibstoffkäfigs 26 aus dessen Innenbereich, wo ein Großteil der weiteren Treibstoffkörper 24 lagert, durch die gasdurchlässige Seitenwände des Treibstoffkäfigs 26 hindurch, zu dessen Außenbereich strömt, um in dem durch den Treibstoffkäfig 26 und die Innenseite 37 des Gehäuses 34 des Gasgenerators 100 gebildeten Raum in Richtung Filter 30 zu strömen. Danach kann das erzeugte Gas dann durch den Filter 30 hindurch strömen, wodurch eine weitere Kühlung bzw. Filterung des Gases vorgenommen wird, um durch die Durchgangsöffnungen 33 hindurch und weiter durch die Ausströmöffnung 36 in den Innenraum des Diffusors 64 strömen zu können, da bereits die zweite Berstmembrane 60 durch Überdruck geöffnet worden ist, wie weiter oben beschrieben. Das erzeugte Gas kann sich nun in dem Innenraum des Diffusors 64 mit dem Kaltgas bzw. einer Restmenge des Kaltgases, welche zu diesem Zeitpunkt noch im Druckgasbehälter 35 vorhanden ist und die im Wesentlichen zeitgleich mit dem erzeugten Gas ebenfalls durch die Ausströmöffnung 36 in den Innenraum des Diffusors 64 strömt, vermischen und danach den Diffusor 64 durch dessen Auslassöffnungen 66 in den Außenbereich des Gasgenerators 100, hin bzw. in eine aufblasbaren Gassack (nicht dargestellt) strömen. Der Diffusor 64 dient hierbei auch als Mischkammer für erzeugtes Gas und vorgespeichertes Druckgas (Kaltgas).

Alternativ dazu ist es auch möglich, dass der Abbrand der Treibstoffkörper 18 derart schnell abläuft, dass auch entsprechend schnell ein entsprechend gebildetes Gas (Abbrandgas) am Ende des Druckgasbehälters 35 ausgebildet ist bzw. bis dorthin geströmt ist, sodass bei der Öffnung des zweiten Berstelements 60 ein im Wesentliches zeitgleiches Ausströmen von vorgespeicherten Kaltgas und gebildeten Gas (Abbrandgas) durch die Ausströmöffnung 36 stattfinden kann.

In Figur 2 ist eine vergrößerte Darstellung eines Teilbereichs des erfindungsgemäßen Gasgenerators, wie er in Figur 1 dargestellt ist, mit reduzierter Bauteildarstellung gezeigt. Konkret zeigt Figur 2 dabei das Gehäuse 34, das mittels der Schweißverbindung 11 mit dem Verschlusselement 50 verschlossen ist. Der Übersichtlichkeit halber ist dabei das Verschlusselement 50 ohne innenliegende Bauteile, wie Anzünder, Anzünderträger bzw. Boosterladung, und mit vereinfachten Kappenboden, ohne erstes Berstelement, dargestellt. Zudem ist noch ein Teilbereich des Gasdurchlasselements 56 und der Treibstoffkörper 18 dargestellt. Figur 2 soll die Ausbildung und Position der Sicke 4, wie sie bereits bezüglich Figur 1 weiter oben schon beschrieben ist, wie folgt näher verdeutlichen. Die Sicke 4 ist als radial umlaufende Vertiefung mit ihrem Sickengrund 6 in einem Abstand A axial zu dem Gehäuseende 10 positioniert. Dabei ist der Abstand A so gewählt, dass die Sicke 4 nahe genug an der Schweißverbindung 11 positioniert ist, um die weiter oben beschriebene mechanische Entlastung der Schweißverbindung 11 zu bewirken. Konkret ist dabei der Sickengrund 6 in einem Abstand A von 5mm bis 30mm, insbesondere 10mm bis 20mm und insbesondere optimal im Abstand A von 15mm hin zu dem Gehäuseende 10 positioniert. Zudem weist die Sicke 4 an der Stelle ihres Sickengrunds 6 die Sickentiefe T als ihre maximale Vertiefung bezüglich des die Sicke 4 umgebenden Außendurchmessers des Gehäuses 34 auf, wobei die Sickentiefe T einen Wert im Bereich von 0,5mm bis 2mm, vorzugsweise einen optimalen Wert von 1mm aufweist. An der Stelle des Sickengrunds 6 ist der Sickendurchmesser D als minimaler Außendurchmesser der Sicke 4 ausgebildet. Bei einem an die Sicke 4 angrenzenden im Wesentlichen durchgehenden Außendurchmesser des Gehäuses 34 von 40mm hat der Sickendurchmesser D konkret einen Wert im Bereich von 37mm bis 39mm, insbesondere einen optimalen Wert bei 38mm.
Die vorgenannten optimalen Werte für die Parameter Abstand A von 15mm, Sickentiefe von 1mm und Sickendurchmesser D von 38mm haben sich aus diversen Versuchen bzw. Simulationen bezüglich eines Berstverhaltens bezüglich des erfindungsgemäßen Gasgenerators als eine optimale Ausgestaltung der Sicke 4 ergeben, um eine optimale mechanische Entlastung der Schweißverbindung 11 zu erreichen. Konkret wurden dabei die vorgenannten Parameter verändert bzw. variiert und jeweils die mechanischen Spannungen an bzw. im Bereich der Schweißverbindung 11 gemessen. Zudem wurde das zugehörige Berstverhalten des Generators betrachtet, wobei per Simulation das Gehäuse des Gasgenerators bis hin zu einem Versagen dessen mechanischer Struktur bzw. Festigkeit belastet wurde.

Figur 2 zeigt zudem, dass die Sicke 4 einen Sickenöffnungswinkel S aufweist, der zwischen der ersten Sickenflanke 8 und der zweiten Sickenflanke 9 gemessen wird und ein relativ flaches Einlaufen der Sickenflanken 8, 9 zueinander verdeutlicht. Konkret weist der Sickenöffnungswinkel S einen Wert im Bereich von 160° bis 170° auf und durch vorgenannte Simulation hat sich insbesondere ein optimaler Sickenwinkel von 165° ergeben.

### Bezugszeichen

- 4: Sicke
- 6: Sickengrund
- 8: Erste Sickenflanke
- 9: Zweite Sickenflanke
- 10: Gehäuseende
- 11: Schweißverbindung
- 12: Außenseite
- 14: Brennkammer
- 16: Treibstoffbett
- 18: Treibstoffkörper
- 26: Treibstoffkäfig
- 28: Brennkammerboden
- 30: Filter
- 32: Endscheibe
- 33: Durchgangsöffnung
- 34: Gehäuse
- 35: Druckgasbehälter
- 36: Ausströmöffnung
- 37: Innenseite
- 38: Anzündereinheit
- 40: Anzünderträger
- 42: Anzünder
- 44: Boosterladung
- 46: Anzündkammer
- 48: Füllkörper
- 50: Verschlusselement
- 52: Erstes Berstelement
- 56: Gasdurchlasselement
- 60: Zweites Berstelement
- 62: Verschlussstück
- 64: Diffusor
- 66: Auslassöffnung
- 100: Gasgenerator
- La: Längsachse
- Le: Längserstreckung
- G: Gasströmung
- R: Radius
- A: Abstand
- T: Sickentiefe
- D: Sickendurchmesser
- S: Sickenöffnungswinkel
- E: Schnittebene
- B: Bewegungsrichtung

## Patentansprüche

1. Gasgenerator (100) für ein Fahrzeugsicherheitssystem, mit einer Längsachse (La), einem äußeren rohrförmigen Gehäuse (34), das als Druckgasbehälter (35) ausgebildet ist, welcher im Ruhezustand des Gasgenerators mit Druckgas befüllt ist, wobei das Gehäuse (34) an einem Gehäuseende (10) mit einem Verschlusselement (50) mittels einer Schweißverbindung (11) verschlossen ist, und sich das Verschlusselement (50) entlang der Längsachse (La) von der Schweißverbindung (11) in das Gehäuse (34) hinein erstreckt
**dadurch gekennzeichnet, dass**
das Gehäuse (34) zumindest eine Sicke (4) für eine mechanische Entlastung der Schweißverbindung (11) als eine zumindest bereichsweise radial um das Gehäuse (34) umlaufende Vertiefung aufweist, wobei die Sicke (4) nach Art und Weise eines Kniegelenks nach radial außen und radial innen entsprechend einer Innendruckänderung in dem Druckgasbehälter (35) bewegbar ist, und wobei ein Sickengrund (6) der Sicke (4) in einem Bereich einer axialen Längserstreckung (Le) des Verschlusselements (50) angebracht ist.

2. Gasgenerator (100) nach Anspruch 1,
**dadurch gekennzeichnet, dass**
die Schweißverbindung (11) nach Art eines Stumpfstoßes, insbesondere teilüberlappenden Stumpfstoßes, und/oder als eine Laserschweißung, Widerstandsschweißung oder Reibschweißung, insbesondere radial umlaufend, ausgebildet ist.

3. Gasgenerator (100) nach Anspruch 1 oder 2,
**dadurch gekennzeichnet, dass**
das Verschlusselement (50) als ein Bereich des Außengehäuses des Gasgenerators (100) ausgebildet ist oder das äußere Gehäuse (34) entlang der Längsachse (La) nach außen hin überragt.

4. Gasgenerator (100) nach zumindest einem der voranstehenden Ansprüche,
**dadurch gekennzeichnet, dass**
das Verschlusselement (50) als massives Bauteil ausgebildet ist, welches im Bereich der Schweißverbindung (11), betrachtet in einer Schnittebene (E) senkrecht zur Längsachse (La) des Gasgenerators (100), eine größere Materialdicke als das Gehäuseende (10), insbesondere eine 1,2 bis 3-fache, weiters insbesondere eine 1,5 bis 2,5-fache, vorzugsweise eine 2-fache, Materialdicke des Gehäuseendes (10), aufweist.

5. Gasgenerator (100) nach zumindest einem der voranstehenden Ansprüche,
**dadurch gekennzeichnet, dass**
mehrere Sicken (4) radial umlaufend an dem Gehäuse (34) angebracht sind, oder dass die zumindest eine Sicke (4) als eine durchgehende radial umlaufende Vertiefung ausgebildet ist, welche einen Außendurchmesser des Gehäuses (34) im Bereich der Sicke (4) auf einen Sickendurchmesser (D) reduziert.

6. Gasgenerator (100) nach zumindest einem der voranstehenden Ansprüche,
**dadurch gekennzeichnet, dass**
der Sickengrund (6) hin zu dem Gehäuseende (10) in einem axialen Abstand (A) von 5mm bis 30mm, insbesondere 10mm bis 20mm, vorzugsweise 15mm, positioniert ist und vorzugsweise im Wesentlichen mittig der axialen Längserstreckung (Le) des Verschlusselements (50) angebracht ist.

7. Gasgenerator (100) nach zumindest einem der voranstehenden Ansprüche,
**dadurch gekennzeichnet, dass**
die maximale radiale Vertiefung an der Position des Sickengrunds (6) als eine Sickentiefe (T), insbesondere mit einer Tiefe im Bereich von 0,5mm bis 2mm, vorzugsweise 1mm, ausgebildet ist.

8. Gasgenerator (100) nach zumindest einem der voranstehenden Ansprüche,
**dadurch gekennzeichnet, dass**
der Sickengrund (6) durch eine erste Sickenflanke (8) und eine zweite Sickenflanke (9) gebildet ist, wobei die beiden Sickenflanken (8, 9) schräg radial nach innen, aufeinander zulaufende, äußere Abschnitte des Gehäuses (34) darstellen, die sich in einem Radius (R), insbesondere mit einem Wert im Bereich von 1mm bis 4mm, vorzugsweise 2mm, an der Position des Sickengrunds (6) treffen.

9. Gasgenerator (100) nach zumindest einem der voranstehenden Ansprüche,
**dadurch gekennzeichnet, dass** die zumindest eine Sicke (4) einen Sickenöffnungswinkel (S) mit einem Wert von 160° bis 170°, insbesondere 165°, hat.

10. Gasgenerator (100) nach zumindest einem der voranstehenden Ansprüche,
**dadurch gekennzeichnet, dass**
die zumindest eine Sicke (4) als eine plastische Verformung, insbesondere in Form einer Krimpung, Bördelung, Prägung oder Rollierung am äußeren Gehäuse (34) des Gasgenerators (100) ausgebildet ist

11. Gassackmodul mit einem Gasgenerator (100), einem von dem Gasgenerator (100) aufblasbaren Gassack und einer Befestigungseinrichtung zur Anbringung des Gassackmoduls an einem Fahrzeug,
**dadurch gekennzeichnet, dass**
der Gasgenerator (100) nach zumindest einem der Ansprüche 1 bis 10 ausgebildet ist.

12. Fahrzeugsicherheitssystem zum Schutz einer Person, beispielsweise eines Fahrzeuginsassen oder Passanten, mit einem Gasgenerator (100), einem von diesem aufblasbaren Gassack, als Teil eines Gassackmoduls, und einer elektronischen Steuereinheit, mittels der der Gasgenerator (100) bei Vorliegen einer Auslösesituation aktivierbar ist,
**dadurch gekennzeichnet, dass**
der Gasgenerator (100) nach zumindest einem der Ansprüche 1 bis 10 ausgebildet ist.

13. Verfahren zur Herstellung eines Gasgenerators (100) nach einem der Ansprüche 1 bis 10, mit den folgenden Schritten:
a) Bereitstellen eines äußeren rohrförmigen Gehäuses (34) für den Gasgenerator (100), das als Druckgasbehälter (35) ausgebildet ist und ein axialseitiges Gehäuseende (10) aufweist, wobei das Gehäuseende (10) eine Öffnung des Gehäuses (34) darstellt;
b) Herstellen zumindest einer Sicke (4) im Gehäuse (34) von außen her als eine zumindest bereichsweise radial um das Gehäuse (34) umlaufende Vertiefung, wobei die zumindest eine Sicke (4) einzig für eine mechanische Entlastung einer Schweißverbindung (11) dient und nach Art und Weise eines Kniegelenks nach radial außen und radial innen entsprechend einer Innendruckänderung in dem Druckgasbehälter (35) bewegt werden kann und für keine weiteren gasgeneratorspezifischen Funktionen, insbesondere nicht für eine Positionierung, Befestigung oder Orientierung, verwendet wird.

14. Verfahren nach Anspruch 13,
**dadurch gekennzeichnet, dass**
die zumindest eine Sicke (4) in Form von mehreren Sicken (4) radial umlaufend oder in Form einer durchgehenden radial umlaufenden Vertiefung, welche den Außendurchmesser des Gehäuses (34) im Bereich der zumindest einen Sicke (4) auf einen Sickendurchmesser (D) reduziert, hergestellt wird.

15. Verfahren nach einem der Ansprüche 13 bis 14,
**dadurch gekennzeichnet, dass**
das äußere Gehäuse (34) für den Gasgenerator (100) als ein für sich separates Bauteil bereitgestellt wird, wobei nach Herstellung der zumindest einen Sicke (4) folgende weitere Schritte vorgenommen werden:
c) Einbauen von weiteren Bauteilen für den Gasgenerator (100) innerhalb des Gehäuses (34);
d) Befüllen des Gehäuses (34) mit einem Druckgas, vorzugsweise mit einem Druck im Bereich von 400bar bis 600bar;
e) Druckdichtes Verschließen des Gehäuses (34) an dem Gehäuseende (10) und dem dem Gehäuseende (10) axial gegenüberliegenden anderen Ende des Gehäuses (34); und
f) Optional weiteres Verbauen von weiteren Bauteilen für den Gasgenerator (100), insbesondere endseitiges Anbringen eines Diffusors (64), an das Gehäuse (34).

## Claims

1. A gas generator (100) for a vehicle safety system, with a longitudinal axis (La), an outer tubular housing (34) which is in the form of a compressed-gas container (35) which, in the inoperative state of the gas generator, is filled with compressed gas, wherein the housing (34) is closed at one housing end (10) with a closure element (50) by means of a welded joint (11), and the closure element (50) extends along the longitudinal axis (La) from the welded joint (11) into the housing (34),
**characterized in that**
the housing (34) has at least one bead (4) for mechanically relieving the welded joint (11) as an at least partially radially peripheral recess around the housing (34), wherein the bead (4) can be deflected radially outwardly and radially inwardly in the manner of a knee joint with a corresponding change of internal pressure inside the compressed-gas container (35), and wherein a bead base (6) of the bead (4) is arranged in a region of an axial longitudinal extent (Le) of the closure element (50).

2. The gas generator (100) according to claim 1,
**characterized in that**
the welded joint (11) is configured in the manner of a butt joint, especially a partially overlapping butt joint and/or, especially radially peripherally, a laser welding, resistance welding or friction welding.

3. The gas generator (100) according to claim 1 or 2,
**characterized in that**
the closure element (50) is in the form of a region of the outer housing of the gas generator (100) or **in that** the closure element (50) protrudes outwardly from the outer housing (34) along the longitudinal axis (La).

4. The gas generator (100) according to any one of the preceding claims,
**characterized in that**
the closure element (50) is in the form of a solid component part which, in the region of the welded joint (11), when viewed in a cutting plane (E) normal to the longitudinal axis (La) of the gas generator (100), has a larger material thickness than the housing end (10), especially a 1.2 to 3-fold, further especially a 1.5 to 2.5-fold, preferably a 2-fold, material thickness of the housing end (10).

5. The gas generator (100) according to at least one of the preceding claims,
**characterized in that**
plural beads (4) are disposed radially peripherally on the housing (34), or **in that** the at least one bead (4) is in the form of a continuous radially peripheral recess which reduces an outer diameter of the housing (34) in the region of the bead (4) to a bead diameter (D).

6. The gas generator (100) according to at least one of the preceding claims,
**characterized in that**
the bead base (6) is positioned toward the housing end (10) at an axial distance (A) of from 5 mm to 30 mm, especially from 10 mm to 20 mm, preferably 15 mm, and is preferably disposed substantially in the middle of the axial longitudinal extent (Le) of the closure element (50).

7. The gas generator (100) according to at least one of the preceding claims,
**characterized in that**
the maximum radial recess is formed at the position of the bead base (6) as a bead depth (T), especially with a depth ranging from 0.5 mm to 2 mm, preferably of 1 mm.

8. The gas generator (100) according to at least one of the preceding claims,
**characterized in that**
the bead base (6) is formed by a first bead flank (8) and a second bead flank (9), wherein the two bead flanks (8, 9) constitute obliquely radially inward converging outer portions of the housing (34) which meet at a radius (R), in particular with a value ranging from 1 mm to 4 mm, preferably of 2 mm, at the position of the bead base (6).

9. The gas generator (100) according to at least one of the preceding claims,
**characterized in that**
the at least one bead (4) has a bead opening angle (S) with a value ranging from 160° to 170°, in particular of 165°.

10. The gas generator (100) according to at least one of the preceding claims,
**characterized in that**
the at least one bead (4) is configured as a plastic deformation, especially in the form of a crimping, flaring, embossing or roller-burnishing at the outer housing (34) of the gas generator (100).

11. An airbag module comprising a gas generator (100), an airbag inflatable by the gas generator (100) and a fastener for attaching the airbag module to a vehicle,
**characterized in that**
the gas generator (100) is configured according to at least one of the claims 1 to 10.

12. A vehicle safety system for protecting a person such as a vehicle occupant or a pedestrian comprising a gas generator (100), an airbag inflatable by the latter as part of an airbag module, and an electronic control unit by means of which the gas generator (100) can be activated when a release situation is given,
**characterized in that**
the gas generator (100) is configured according to at least one of the claims 1 to 10.

13. A method for producing a gas generator (100) according to any one of the claims 1 to 10, comprising the following steps of:
a) providing an outer tubular, housing (34) for the gas generator (100) in the form of a compressed-gas container (35) and has a housing end (10) on the axial side, the housing end (10) constituting an opening of the housing (34);
b) producing at least one bead (4) in the housing (34) from the outside as an at least partially radially peripheral recess around the housing (34), wherein the at least one bead (4) serves solely for mechanically relieving a welded joint (11) and can be deflected radially outwardly and radially inwardly in the manner of a knee joint with a corresponding change of internal pressure inside the compressed-gas container (35), and is not used for any further functions specific to the gas generator, especially not for positioning, fastening or orientation.

14. The method according to claim 13,
**characterized in that**
the at least one bead (4) is produced in the form of plural beads (4), to be radially peripheral or in the form of a continuous radially peripheral recess which reduces the outer diameter of the housing (34) in the region of the at least one bead (4) to a bead diameter (D).

15. The method according to any one of the claims 13 to 14,
**characterized in that**
the outer housing (34) for the gas generator (100) is provided as a component part separate per se, wherein after producing the at least one bead (4) the following further steps are taken:
c) installing further component parts for the gas generator (100) inside the housing (34);
d) filling the housing (34) with a compressed gas, preferably at a pressure ranging from 400 bar to 600 bar;
e) closing the housing (34) in a pressure-tight manner at the housing end (10) and the other end of the housing (34) axially opposed to the housing end (10); and
f) optionally further installing additional component parts for the gas generator (100), especially arranging a diffusor (64) at the end side on the housing (34).

## Revendications

1. Générateur de gaz (100) pour un système de sécurité de véhicule, comprenant un axe longitudinal (La), un boîtier extérieur tubulaire (34) qui est réalisé sous la forme d'un réservoir de gaz comprimé (35), lequel est rempli de gaz comprimé lorsque le générateur de gaz est au repos, pour lequel le boîtier (34) est fermé à une extrémité (10) du boîtier par un élément de fermeture (50) au moyen d'une liaison soudée (11), et pour lequel l'élément de fermeture (50) s'étend le long de l'axe longitudinal (La) depuis la liaison soudée (11) jusque dans le boîtier (34).
**caractérisé en ce que**
le boîtier (34) présente au moins une nervure (4) pour une décharge mécanique du joint soudé (11) sous la forme d'un renfoncement s'étendant au moins par zones radialement autour du boîtier (34), pour lequel la nervure (4) peut être déplacée à la manière d'une rotule vers l'extérieur radialement et vers l'intérieur radialement en fonction d'une modification de la pression interne dans le réservoir de gaz comprimé (35), et pour lequel un fond de nervuure (6) de la nervure (4) est placé dans une zone d'une extension longitudinale axiale (Le) de l'élément de fermeture (50).

2. Générateur de gaz (100) selon la revendication 1,
**caractérisé en ce que**
le joint soudé (11) est réalisé à la manière d'un joint bout à bout, en particulier d'un joint bout à bout à chevauchement partiel, et/ou sous la forme d'une soudure au laser, d'une soudure par résistance ou d'une soudure par friction, en particulier radialement sur le pourtour.

3. Générateur de gaz (100) selon la revendication 1 ou 2,
**caractérisé en ce que**
l'élément de fermeture (50) est conçu comme une zone du boîtier extérieur du générateur de gaz (100) ou dépasse le boîtier extérieur (34) vers l'extérieur le long de l'axe longitudinal (La).

4. Générateur de gaz (100) selon au moins l'une des revendications précédentes,
**caractérisé en ce que**
l'élément de fermeture (50) est réalisé sous la forme d'une pièce massive, laquelle dans la zone du joint soudé (11), vue dans un plan de coupe (E) perpendiculaire à l'axe longitudinal (La) du générateur de gaz (100), présente une épaisseur de matériau supérieure à celle de l'extrémité du boîtier (10), en particulier de 1,2 à 3 fois, plus particulièrement de 1,5 à 2,5 fois, de préférence de 2 fois, l'épaisseur du matériau de l'extrémité du boîtier (10).

5. Générateur de gaz (100) selon au moins l'une des revendications précédentes,
**caractérisé en ce que**
plusieurs nervures (4) sont appliquées radialement sur le boîtier (34), ou **en ce que** la au moins une nervure (4) est réalisée sous la forme d'un renfoncement continue radialement sur le pourtour, qui réduit un diamètre extérieur du boîtier (34) dans la zone de la nervure (4) à un diamètre de nervure (D).

6. Générateur de gaz (100) selon au moins l'une des revendications précédentes,
**caractérisé en ce que**
le fond de nervure (6) est positionné vers l'extrémité du boîtier (10) à une distance axiale (A) de 5mm à 30mm, en particulier de 10mm à 20mm, de préférence à 15mm, et est de préférence monté sensiblement au centre de l'extension longitudinale axiale (Le) de l'élément de fermeture (50).

7. Générateur de gaz (100) selon au moins l'une des revendications précédentes,
**caractérisé en ce que**
le renfoncement radial maximal à la position du fond de la nervure (6) est conçu comme une profondeur de nervure (T), en particulier avec une profondeur dans la plage de 0,5 mm à 2 mm, de préférence à 1 mm.

8. Générateur de gaz (100) selon au moins l'une des revendications précédentes,
**caractérisé en ce que**
le fond de nervure (6) est formé par un premier flanc de nervure (8) et un deuxième flanc de nervure (9), pour lequel les deux flancs de nervure (8, 9) constituent des sections extérieures du boîtier (34) se rapprochant l'une de l'autre en oblique radialement vers l'intérieur, qui se rencontrent à la position du fond de nervure (6) selon un rayon (R), en particulier avec une valeur dans la plage de 1 mm à 4 mm, de préférence de 2 mm.

9. Générateur de gaz (100) selon au moins l'une des revendications précédentes,
**caractérisé en ce que** ladite au moins une nervure (4) a un angle d'ouverture de nervure (S) avec une valeur de 160° à 170°, en particulier 165°.

10. Générateur de gaz (100) selon au moins l'une des revendications précédentes,
**caractérisé en ce que**
l'au moins une nervure (4) est réalisée sous la forme d'une déformation plastique, notamment sous la forme d'un sertissage, d'un rabattage, d'un gaufrage ou d'un roulage sur le boîtier extérieur (34) du générateur de gaz (100)

11. Module airbag comprenant un générateur de gaz (100), un coussin gonflable pouvant être gonflé par le générateur de gaz (100) et un dispositif de fixation pour monter le module airbag sur un véhicule,
**caractérisé en ce que**
le générateur de gaz (100) est réalisé selon au moins l'une des revendications 1 à 10.

12. Système de sécurité pour véhicule destiné à protéger une personne, par exemple un passager du véhicule ou un passant, comprenant un générateur de gaz (100), un coussin gonflable par celui-ci, en tant que partie d'un module airbag, et une unité de commande électronique au moyen de laquelle le générateur de gaz (100) peut être activé en présence d'une situation de déclenchement,
**caractérisé en ce que**
le générateur de gaz (100) est réalisé selon au moins l'une des revendications 1 à 10.

13. Procédé de fabrication d'un générateur de gaz (100) selon l'une des revendications 1 à 10, comprenant les étapes suivantes :
a) Préparation d'un boîtier tubulaire extérieur (34) pour le générateur de gaz (100), qui est conçu comme un réservoir de gaz sous pression (35) et présente une extrémité de boîtier (10) côté axial, pour lequel l'extrémité de boîtier (10) constitue une ouverture du boîtier (34) ;
b) réalisation d'au moins une nervure (4) dans le boîtier (34) depuis l'extérieur sous la forme d'un renfoncement s'étendant radialement au moins par zones autour du boîtier (34), pour lequel la au moins une nervure (4) sert uniquement à une décharge mécanique d'un joint soudé (11) et peut être déplacée à la manière d'une rotule vers l'extérieur radialement et vers l'intérieur radialement en fonction d'une modification de la pression interne dans le réservoir de gaz comprimé (35) et n'est pas utilisée pour d'autres fonctions spécifiques au générateur de gaz, notamment pour un positionnement, une fixation ou une orientation.

14. Procédé selon la revendication 13,
**caractérisé en ce que**
la au moins une nervure (4) est fabriquée sous la forme de plusieurs nervures (4) s'étendant radialement ou sous la forme d'un renfoncement continu s'étendant radialement qui réduit le diamètre extérieur du boîtier (34) dans la zone de la au moins une nervure (4) à un diamètre de nervure (D).

15. Procédé selon l'une quelconque des revendications 13 à 14,
**caractérisé en ce que**
le boîtier extérieur (34) du générateur de gaz (100) est mis à disposition en tant que composant séparé en soi, pour lequel les étapes supplémentaires suivantes sont effectuées après la fabrication de la au moins une nervure (4):
c) montage d'autres composants du générateur de gaz (100) à l'intérieur du boîtier (34) ;
d) Remplissage du boîtier (34) avec un gaz sous pression, de préférence à une pression comprise dans une plage de 400 bar à 600 bar ;
e) fermeture étanche à la pression du boîtier (34) à l'extrémité (10) du boîtier et à l'autre extrémité du boîtier (34) opposée axialement à l'extrémité (10) du boîtier ; et
f) en option, montage d'autres composants du générateur de gaz (100), en particulier montage d'un diffuseur (64) à l'extrémité du boîtier (34).
